# EUROPÄISCHE PATENTSCHRIFT

(11) **EP 3 239 733 B1**
(45) Veröffentlichungstag und Bekanntmachung des Hinweises auf die Patenterteilung: **30.09.2020**
(21) Anmeldenummer: 17167669.5
(22) Anmeldetag: 24.04.2017
(51) Int. Cl.: G01S 13/931, G01S 7/40

(54) **VERFAHREN ZUM BETRIEB EINES RADARSENSORS IN EINEM KRAFTFAHRZEUG UND KRAFTFAHRZEUG**
METHOD FOR OPERATING A RADAR SENSOR IN A MOTOR VEHICLE AND MOTOR VEHICLE
PROCÉDÉ DE FONCTIONNEMENT D'UN CAPTEUR RADAR DANS UN VÉHICULE AUTOMOBILE ET VÉHICULE AUTOMOBILE

(30) Priorität: 26.04.2016 DE 102016005058
(43) Veröffentlichungstag der Anmeldung: 01.11.2017
(73) Patentinhaber: AUDI AG, 85045 Ingolstadt (DE)
(72) Erfinder: Khlifi, Rachid, 85748 Garching (DE)

(56) Entgegenhaltungen:
- DE-A1- 10 149 115
- DE-A1-102011 084 264
- DE-A1-102012 018 012
- US-A1- 2010 182 199
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 1. Dezember 2010 (2010-12-01), Seiten 2746-2756, XP055088008, ISSN: 0018-9200, DOI: 10.1109/JSSC.2010.2075250

## Beschreibung

Die Erfindung betrifft ein Verfahren zum Betrieb eines Radarsensors in einem Kraftfahrzeug, welcher Radarsensor durch Einstellung von ursprünglichen Betriebsparametern nach Verbau in einer Starteinbauposition in einer ursprünglichen Verbauumgebung einbaupositionsspezifisch kalibriert wird. Daneben betrifft die Erfindung ein Kraftfahrzeug.

In heutigen Fahrzeugsystemen, insbesondere Fahrerassistenzsystemen, spielt die Erfassung von dynamischen und statischen Zielen im Umfeld des eigenen Kraftfahrzeugs eine wichtige Rolle. Abhängig von erkannten Objekten und/oder Merkmalen im Umfeld des Kraftfahrzeugs kann beispielsweise eine Bewertung der Verkehrssituation durchgeführt werden, wobei bei Erfüllung eines Maßnahmenkriteriums eine Maßnahme ausgelöst werden kann, beispielsweise eine Ausgabe einer Warnung an einen Fahrer und/oder ein Fahreingriff. Insbesondere ist es bekannt, Sensordaten verschiedener Umfeldsensoren des Kraftfahrzeugs zu fusionieren und in einem entsprechenden Steuergerät, das dem Fahrerassistenzsystem zugeordnet ist, weiter auszuwerten, beispielsweise im Rahmen einer Situationsanalyse des aktuellen Verkehrsszenarios. Bei einer Situationsanalyse werden möglichst viele Parameter herangezogen, um eine gute Bewertung für die Maßnahmenkriterien zu ermöglichen.

Die Verwendung von Radarsensoren in Kraftfahrzeugen ist im Stand der Technik bereits weitgehend bekannt. Beispiele hierfür sind in DE10 2012 018 012A1 und US 2010/0182199 offenbart. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Gerade derartige, auf Halbleitertechnologie, insbesondere CMOS-Technologie, basierende Radarsensoren werden bevorzugt verdeckt im Kraftfahrzeug verbaut, beispielsweise innerhalb eines Stoßfängers. Nachdem der verdeckte Verbau die Leistungsfähigkeit der Radarsensoren beeinflussen kann, ist es bekannt, beispielsweise im Rahmen von Applikationsfahrten, optimierte Betriebsparameter für den Radarsensor dahingehend aufzufinden, dass trotz des verdeckten Einbaus eine möglichst gute Leistungsfähigkeit erzielt wird. Mit anderen Worten werden Betriebsparameter für eine Einbauposition und somit auch eine gegebene Verbauumgebung spezifisch ermittelt und für die Radarsensoren, die an der entsprechenden Einbauposition verbaut werden, eingesetzt. Derartige Betriebsparameter können im Rahmen dieser Beschreibung beispielsweise Detektionsschwellwerte, Rauschlevels, RCS, SNR, Frequenzbandbreiten und dergleichen sein.

Allerdings können, sowohl bei verdecktem als auch nicht verdecktem Verbau von Radarsensoren in einem Kraftfahrzeug, über die Zeit Veränderungen auftreten, insbesondere bezüglich der Einbauposition des Radarsensors, die von der Starteinbauposition abweichen kann, oder bezüglich der Verbauumgebung. Verantwortlich hierfür können Temperaturveränderungen, Alterung, kleinere Beschädigungen des Kraftfahrzeugs und dergleichen sein. Sind solche Veränderungen eingetreten, kann dies zu einer Degradation, also Reduzierung, der Leistungsfähigkeit (Performance) des Radarsensors führen. In diesem Fall sind die in dem Radarsensor fest gespeicherten Betriebsparameter gegebenenfalls ungeeignet, so dass die Funktion von die Sensordaten des Radarsensors nutzenden Fahrzeugsystemen beeinträchtigt werden kann, beispielsweise also Falsch- und Fehlwarnungen auftreten können.

Um dieses Problem zu beseitigen, könnte eine erneute Kalibrierung des Radarsensors und/oder eine Korrektur der Verbausituation werkstattseitig vorgesehen werden. Dafür ist ein hoher Aufwand erforderlich, der ungewünscht ist.

Der Erfindung liegt daher die Aufgabe zugrunde, eine Möglichkeit zur verbesserten Leistungsfähigkeit von Radarsensoren auch bei längerfristiger Nutzung innerhalb eines Kraftfahrzeugs anzugeben.

Zur Lösung dieser Aufgabe ist bei einem Verfahren der eingangs genannten Art erfindungsgemäß vorgesehen, dass während des Betriebs des Radarsensors nach dem Verbau und der Kalibrierung in der Starteinbauposition in der ursprünglichen Verbauumgebung regelmäßig eine die Abweichung von der ursprünglichen Leistungsfähigkeit beschreibende Abweichungsinformation durch Messungen mit dem Radarsensor ermittelt wird, wobei bei einem erfüllten, die Abweichungsinformation auswertenden Rekalibrierungskriterium neue, die Reduzierung der Leistungsfähigkeit wenigstens teilweise kompensierende Betriebsparameter des Radarsensors ermittelt und eingestellt werden.

Die Erfindung schlägt mithin ein selbstadaptives Radarsystem vor, in dem der Radarsensor sich Veränderungen in seiner Verbausituation vollständig automatisch anpassen kann, wobei mit besonderem Vorteil, worauf im Folgenden noch näher eingegangen werden wird, neue Entwicklungen bei Radarsensoren genutzt werden, die es erlauben, entsprechende Steuereinrichtungen auch radarsensorseitig, insbesondere durch dessen Steuereinheit, zu realisieren. Dies ist insbesondere bei kleinbauenden, auf Halbleitertechnologie, insbesondere CMOS-Technologie, basierenden Radarsensoren vorteilhaft möglich, da es dann denkbar ist, eine geeignete Rechenleistung bereits im Radarsensor selber vorzusehen. Bevorzugt im Radarsensor selbst kann mithin festgestellt werden, ob eigene Alterungseffekte, Alterungseffekte der Umgebung und/oder sonstige Veränderungen am Radarsensor selbst oder in der Verbauumgebung vorliegen, die die Leistungsfähigkeit des Radarsensors stärker beeinträchtigen. Die durchführende Steuereinrichtung, bevorzugt der Radarsensor selbst, kann dann automatisch auf diese Veränderungen der Einbausituation reagieren und seine Betriebsparameter selbst anpassen, so dass immer die bestmögliche Leistungsfähigkeit erzielt werden kann. Die Ermittlung der Abweichungsinformation erfolgt dabei zweckmäßig durch einen Vergleich ursprünglich abgelegter Leistungsfähigkeitswerte mit aktuell gemessenen Leistungsfähigkeitswerten bzw. durch Vergleich von die Leistungsfähigkeit beschreibenden Größen. Ist eine Degradation, insbesondere über längere Zeit, feststellbar, kann eine Rekonfiguration/Adaption des Radarsensors vorgenommen werden.

Auf diese Weise ist eine kosten- und ressourcengünstige Lösung, um der Leistungsdegradation eines Radarsensors entgegenzuwirken, gegeben. Die Leistungsfähigkeit über die Laufzeit kann verbessert sichergestellt werden, was dann entsprechend auch für die Funktionen der Sensordaten des Radarsensors nutzenden Fahrzeugsysteme gilt. Es sind keine Werkstatt-Investitionen notwendig.

Dabei sind zwei grundlegende, alternative Ausführungsformen der vorliegenden Erfindung denkbar. Zum einen ist es möglich, dass die neuen Betriebsparameter bei Eintritt des Rekalibrierungskriteriums erst ermittelt werden, zum anderen ist es denkbar, dass Sätze von Kalibrierungsparametern, die als neue Betriebsparameter verwendet werden können, bereits vorliegen und die Ermittlung neuer Betriebsparameter die Auswahl eines dieser Sätze beinhaltet, was erfindungsgemäß bevorzugt wird.

Mithin sieht eine weniger bevorzugte Ausgestaltung der vorliegenden Erfindung vor, dass zur Ermittlung der neuen Betriebsparameter in einem Optimierungsverfahren verschiedene Testsätze von Betriebsparametern eingestellt werden und Testmessungen zur Ermittlung wenigstens eines die Leistungsfähigkeit beschreibenden Leistungsfähigkeitswertes durchgeführt werden, wobei ein die durch den Leistungsfähigkeitswert beschriebene Leistungsfähigkeit maximierender Testsatz von Betriebsparametern als neue Betriebsparameter ermittelt wird. Wird also eine zu starke Degradierung der Leistungsfähigkeit festgestellt, wird in dieser Ausführungsalternative ein Optimierungsverfahren angestoßen, um verschiedene Testsätze von Betriebsparametern zu prüfen, die Leistungsfähigkeit (Performance-Güte) zu bestimmen und den Testsatz mit der besten Leistungsfähigkeit auszuwählen, um neue Betriebsparameter einzustellen. Hierbei können viele Optimierungspfade automatisch durchlaufen werden. Um einen optimalen Testsatz auffinden zu können, können dabei übliche Optimierungsalgorithmen eingesetzt werden, so dass eine schnelle und robuste Ermittlung eintritt. Dabei können selbstverständlich Randbedingungen innerhalb des Radarsensors abgelegt werden, beispielsweise erlaubte Parameterbereiche für die einzelnen Betriebsparameter. Nicht gänzlich ausgeschlossen ist es auch, eine Art "Sweeps" aller möglichen einstellbaren Werte für Betriebsparameter durchzuführen, um das Optimum hinsichtlich der Leistungsfähigkeit zu bestimmen. Diese Vorgehensweise ist jedoch weniger bevorzugt, da dann ein enormer Rechenaufwand und gegebenenfalls auch Zeitaufwand entsteht, während dem der Radarsensor insbesondere auch nicht zur Messung aktueller Sensordaten zur Verfügung stünde.

Um das Auffinden des die Leistungsfähigkeit maximierenden Testsatzes zu beschleunigen, kann vorgesehen sein, dass im Rahmen der Testmessungen oder einer Vorbereitungsmessung Veränderungen der Einbauposition und/oder der Verbauumgebung beschreibende Veränderungsparameter ermittelt werden, die bei der Wahl eines ersten und/oder weiteren Testsatzes nach Auswertung des Leistungsfähigkeitswerts einer vorangegangenen Testmessung berücksichtigt werden. Detektionseigenschaften des auch in diesem Fall bevorzugt als auf Halbleitertechnologie basierender Radarsensor realisierten Radarsensors werden hierbei ausgenutzt, um Veränderungen der Einbausituation beschreibende Veränderungsparameter aufzufinden und somit mithin die Ursache der Leistungsdegradation zu klassifizieren, so dass eine gezielte Auswahl von Startwerten für den ersten Testsatz und/oder eine gezielte Wahl der Optimierungsrichtung stattfinden kann, was das schnelle Auffinden eines die Leistungsfähigkeit maximierenden Testsatzes begünstigt.

Eine gegenüber der Nutzung eines Optimierungsverfahrens bei Eintritt des Rekalibrierungskriteriums bevorzugte Ausführungsalternative sieht jedoch vor, dass für den oder einen baugleichen Radarsensor in der oder in einer baugleichen Verbauumgebung für unterschiedliche, eine gegenüber der Starteinbauposition veränderte Einbauposition und/oder eine Veränderung der Verbauumgebung beschreibende Sätze von Veränderungsparametern durch Simulation und/oder Messung die gegenüber der Starteinbauposition und/oder der ursprünglichen Verbauumgebung auftretenden Leistungsfähigkeitseinbußen wenigstens teilweise kompensierende Kalibrierungsparameter und eine ein auf wenigstens ein vordefiniertes Sendesignal unter Verwendung der ursprünglichen Betriebsparameter bei Vorliegen der durch die Veränderungsparameter beschriebenen Veränderungen gemessenes Reflektionssignal beschreibende Vergleichsinformation bestimmt wird, wobei bei erfülltem Rekalibrierungskriterium durch Vergleich einer durch Aussenden des wenigstens einen vordefinierten Sendesignals und Vermessen eines zugeordneten Reflektionssignals ermittelten aktuellen Messinformation mit den Vergleichsinformationen wenigstens ein mögliche eingetretene Veränderungen beschreibender Auswahlsatz von Veränderungsparametern ermittelt und die Kalibrierungsparameter wenigstens eines des wenigstens einen Auswahlsatzes als neue Betriebsparameter des Radarsensors eingestellt werden.

Es wird letztlich eine Datenbank, die bevorzugt in einer Speichereinrichtung des Radarsensors selbst gespeichert werden kann, ermittelt, in der Sätzen von Veränderungsparametern, die Veränderungen in der Einbausituation beschreiben, zugeordnet Vergleichsinformationen und Sätze von Kalibrierungsparametern abgelegt sind. Die Vergleichsinformation bezieht sich auf einen vorgegebenen Messvorgang mit einem vordefinierten Sendesignal und kann mithin dazu dienen, den wenigstens einen die tatsächlich aufgetretenen Veränderungen am besten beschreibenden Satz von Veränderungsparametern in der Datenbank aufzufinden, mithin auch die diesem entsprechend zugeordneten Kalibrierungsparameter. Die Ermittlung der Vergleichsinformationen und der Leistungsfähigkeitseinbußen kompensierenden Kalibrierungsparameter wird bevorzugt vorab und/oder für mehrere baugleiche, einbaupositionsgleiche und verbauumgebungsgleiche Radarsensoren bestimmt. Damit kann eine entsprechende Datenbank in eine Speichereinrichtung jedes entsprechend in der Starteinbauposition in der ursprünglichen Verbauumgebung zu verbauenden Radarsensors bzw. einer zugeordneten, das Verfahren durchführenden radarsensorexternen Steuereinrichtung abgelegt werden und muss nicht für jeden Radarsensor einzeln bestimmt werden. Insbesondere ist es dabei möglich, dies auch ohne Messungen zu erlauben, beispielsweise, indem Simulationen unter Nutzung eines geeigneten Simulationsalgorithmus durchgeführt werden. Denkbar sind selbstverständlich auch tatsächliche Messungen, beispielsweise während einer Applikationsfahrt oder dergleichen. Es können dabei während der Ermittlung der Vergleichsinformationen und der Kalibrierungsparameter immer die die auftretenden Leistungsfähigkeitseinbußen optimal wenigstens teilweise kompensierenden Kalibrierungsparameter aufgefunden werden, beispielsweise, indem "Sweeps" aller möglichen einstellbaren Betriebsparameter durchgeführt werden und/oder gezielte Optimierungsverfahren eingesetzt werden.

Das Abspeichern der Vergleichsinformationen und der entsprechenden Kalibrierungsparameter erlaubt es dann, bei Eintritt der entsprechenden Veränderungen die die auftretenden Leistungsfähigkeitsdegradationen kompensierenden Kalibrierungsparameter zu laden und schnell zu nutzen.

Dabei sei an dieser Stelle noch allgemein angemerkt, dass die Abweichungsinformation üblicherweise auch durch einen Vergleich von Messergebnissen einer aktuellen Abweichungsmessung mit Messergebnissen einer unmittelbar nach Einbau vorgenommenen Abweichungsmessung bestimmt werden wird; für die Abweichungsmessung kann dann wenigstens ein weiteres vordefiniertes Sendesignal eingesetzt werden. Bevorzugt ist es jedoch, wenigstens einen Teil der vordefinierten Sendesignale zur Ermittlung der Vergleichsinformation und der Messinformation heranzuziehen. Dabei müssen bei der Ermittlung der Abweichungsinformation verglichene Messergebnisse nicht unmittelbar eine Veränderung der Leistungsfähigkeit anzeigen, sondern können dies auch mittelbar, insbesondere bezogen auf Veränderungsparameter, tun, so dass beispielsweise Veränderungen der Einbauposition und der Verbauumgebung festgestellt werden können, was insbesondere mit den bereits erwähnten modernen, kleinbauenden und hochauflösenden, auf Halbleitertechnologie, insbesondere CMOS-Technologie, basierenden Radarsensoren möglich ist.

Bei der Ausführungsalternative mit Nutzung einer Datenbank mit Vergleichsinformationen und Kalibrierungsparametern sieht eine vorteilhafte Weiterbildung vor, dass bei mehreren Auswahlsätzen ein im Rahmen eines Optimierungsverfahrens und/oder durch Optimierungsmessungen ermittelter, die beste Leistungsfähigkeit des Radarsensors bei Nutzung der zugeordneten Kalibrierungsparameter erlaubender Auswahlsatz ermittelt und dessen Kalibrierungsparameter als Betriebsparameter eingestellt werden. Während dann, wenn eine eindeutige Zuordnung der aktuellen Messinformationen zu einer bestimmten Vergleichsinformation möglich ist, unmittelbar die entsprechenden Kalibrierungsparameter herangezogen werden können, können auch Fälle auftreten, in denen die Messinformation keine eindeutige Zuordnung zu einer bestimmten Vergleichsinformation erlaubt. Dann können, insbesondere durch "Ausprobieren" in Optimierungsmessungen, dennoch die Kalibrierungsparameter ermittelt werden, die als neue Betriebsparameter die beste Leistungsfähigkeit des Radarsensors sicherstellen können. Zweckmäßigerweise können die einzelnen Veränderungsparameter nach Art eines Sweeps diesen zugeordnete Veränderungsparameterintervalle abdecken. Das bedeutet, es können für die einzelnen Veränderungsparameter Veränderungsparameterintervalle vorgegeben werden, die beispielsweise regelmäßig abgetastet werden können, um aus den möglichen Werten für die Veränderungsparameter die entsprechenden Veränderungsparametersätze zusammenstellen zu können, für die die Vergleichsinformationen und die Kalibrierungsparameter zu ermitteln sind. Auf diese Weise können eine Vielzahl möglicher, auch kombinierter, Veränderungen der Einbausituation abgedeckt werden. Selbstverständlich ist es alternativ oder zusätzlich auch möglich, bestimmte Veränderungsparametersätze vorzugeben, die typischerweise auftretende Veränderungskonstellationen beschreiben und/oder es ist denkbar, bedingte Veränderungsparameterintervalle anzugeben, das bedeutet, dass die Wahl eines Wertes für einen Veränderungsparameter festlegen kann, welche Werte andere Veränderungsparameter annehmen können.

Werden Veränderungsparameter verwendet, kann eine zweckmäßige Ausgestaltung der vorliegenden Erfindung vorsehen, dass auch wenigstens ein auf die Umgebung bezogener Veränderungsparameter, der eine Veränderung der Umgebungsbedingungen des Kraftfahrzeugs beschreibt, insbesondere eine Wettersituation, verwendet wird, wobei bei Erfüllung des Rekalibrierungskriteriums aufgrund einer Veränderung der Umgebungsbedingungen die verändert eingestellten Betriebsparameter nur für den Zeitraum des Vorliegens der Veränderung der Umgebungsbedingungen verwendet werden. Auch durch bestimmte sporadische Beeinträchtigungen, beispielsweise Wettersituationen, oder eine temporäre Verdeckung des Radarsensors kann eine Degradation der Leistungsfähigkeit auftreten, die jedoch nur für eine im Vergleich kurze Zeit anhält. Kann festgestellt werden, bevorzugt im Rahmen des Rekalibrierungskriteriums, dass eine solche Änderung der Umgebungsbedingungen temporärer Art vorliegt, ist auch nur eine temporäre Anpassung der Betriebsparameter möglich, so dass die neuen Betriebsparameter zweckmäßigerweise nur solange aufrecht erhalten werden, bis die temporär veränderte Umgebungsbedingung wieder normalisiert ist, so dass dann zu den zuvor eingestellten Betriebsparametern zurückgekehrt werden kann. Liegt beispielsweise ein starker Regen vor, können für dessen Dauer ebenso geeignete, durch den Regen eintretende Leistungsfähigkeitseinbußen kompensierende Betriebsparameter eingesetzt werden.

Zweckmäßigerweise kann das Rekalibrierungskriterium einen zeitlichen Verlauf der Abweichungsinformationen auf ein länger andauerndes Vorliegen einer Reduzierung der Leistungsfähigkeit gegenüber der ursprünglichen Leistungsfähigkeit auswerten. Das bedeutet, äußerst kurzzeitig festgestellte Leistungsfähigkeitsdegradierungen, beispielsweise durch Messfehler oder schnell vorübergehende Effekte, können im Rahmen der vorliegenden Erfindung ignoriert werden, so dass eine Rekalibrierung des Radarsensors tatsächlich nur dann erfolgt, wenn eine zeitliche andauernde, die Leistungsfähigkeit des Radarsensors verschlechternde Änderung eingetreten ist. Die Steuereinrichtung, insbesondere also der Radarsensor selber, überprüft somit, ob eine Degradation der Leistungsfähigkeit über längere Zeit feststellbar ist, um erst dann eine Adaption des Sensorbetriebs vorzunehmen.

Eine besonders bevorzugte Weiterbildung des Verfahrens sieht vor, dass bei Erfüllung eines die Abweichungsinformation auswertenden, eine größere Abweichung der Leistungsfähigkeit als beim Rekalibrierungskriterium anzeigenden Defektkriteriums und/oder eines die Nichtauffindbarkeit von eine vorbestimmte Leistungsfähigkeit zusichernden neuen Betriebsparametern anzeigenden Defektkriteriums ein Defektzustand für den Radarsensor gesetzt wird und dieser insbesondere deaktiviert wird. Sind die Leistungseinbußen so stark, dass nicht mehr damit gerechnet werden kann, durch Anpassung der Betriebsparameter zu kompensieren, oder war es im Rahmen des Ermittlungsverfahrens nicht möglich, neue Betriebsparameter zu ermitteln, die zur Herstellung einer Mindestleistungsfähigkeit geeignet sind, kann mithin ein Defektkriterium erfüllt sein, das sich auf den Radarsensor, aber auch seine Verbauumgebung beziehen kann. Ist mithin eine vorbestimmte Mindestleistungsfähigkeit (Mindestperformance) nicht mehr möglich, meldet der Radarsensor bzw. die das Verfahren durchführende Steuereinrichtung einen Defektzustand an. Dabei kann insbesondere vorgesehen sein, dass der Radarsensor deaktiviert wird und/oder zumindest seine Sensordaten nicht weiter verwendet werden. Auf diese Weise kann sichergestellt werden, dass aufgrund der verschlechterten Leistung des Radarsensors nicht versehentlich in Fahrzeugsystemen Maßnahmen ausgelöst werden und dergleichen. Dabei ist darauf hinzuweisen, dass auch zumindest das unmittelbar die Abweichungsinformation auswertende Defektkriterium bevorzugt den Verlauf der Abweichungsinformation über die Zeit analysiert.

Mit besonderem Vorteil kann vorgesehen sein, dass bei Erfüllung des wenigstens einen Defektkriteriums eine zumindest den betroffenen Radarsensor beschreibende Defektinformation an einen Fahrer ausgegeben wird. Auf diese Weise kann mithin der Fahrer informiert werden, wenn die volle Leistungsfähigkeit des Radarsystems nicht mehr gegeben ist, da die Sensordaten eines Radarsensors nicht mehr genutzt werden können.

Eine besonders vorteilhafte Ausgestaltung der Erfindung sieht dann, wenn eine Datenbank mit Vergleichsinformationen und Kalibrierungsparametern verwendet wird, vor, dass auch bei Erfüllung des Defektkriteriums durch Vergleich einer durch Aussenden des wenigstens einen vordefinierten Sendesignals und Vermessen eines zugeordneten Reflektionssignals ermittelten aktuellen Messinformationen mit den Vergleichsinformationen wenigstens ein mögliche eingetretene Veränderungen beschreibender Ursachensatz von Veränderungsparametern ermittelt wird, wobei durch Auswertung des Ursachensatzes ermittelt wird, ob der Defekt in der Verbauumgebung oder dem Radarsensor vorliegt. Wird das Defektkriterium ohnehin im Rahmen der (in diesem Fall versuchten) Ermittlung neuer Betriebsparameter ausgewertet, können die Auswahlsätze unmittelbar zu den Ursachensätzen führen, insoweit die Veränderungsparameter, was zweckmäßig ist, auch den Kalibrierungsparametern und Vergleichsinformationen zugeordnet abgespeichert sind. Auf diese Weise ist es mit besonderem Vorteil möglich, die wenigstens eine Veränderung, die verantwortlich ist, zu lokalisieren, welche beispielsweise in eine auszugebende Defektinformation integriert werden kann. Eine derartige Defektinformation kann auch in einem Fehlerspeicher abgelegt werden. Ist ein Defekt des Radarsensors zu besorgen, sollte der Radarsensor ausgetauscht werden; liegt der Defekt in der Verbauumgebung, beispielsweise einem Stoßfänger, kann ein Austausch bestimmter Komponenten der Verbauumgebung, beispielsweise des Stoßfängers, vorgenommen werden.

Eine besonders zweckmäßige Weiterbildung der vorliegenden Erfindung sieht vor, dass der Radarsensor mit einer Frequenzbandbreite größer als 2 GHz, insbesondere größer oder gleich 4 GHz, betrieben und/oder ein Radarsensor mit einer Antennenanordnung mit mehreren Sende- und/oder Empfangsantennen verwendet wird, die insbesondere zur Winkelauflösung in zwei zueinander senkrechten Ebenen angeordnet sind. Um dem Radarsensor die Möglichkeit zu bieten, sich selbst an Veränderungen in der Einbausituation zu adaptieren, ist es insbesondere zweckmäßig, wenn verwendete Modulationsverfahren mit Multi-Chirp-Verfahren die Möglichkeit bieten, die Frequenzrampen in ihrer Charakteristik zu verändern. Um eine Veränderung in der Einbausituation durch den Radarsensor vermessen zu können, mithin insbesondere die Messinformation aufzunehmen, ist es zum einen äußerst günstig, wenn der Radarsensor bzw. ein Chirp-Generator des Radarsensors eine hohe Frequenzbandbreite sendet und verarbeitet, bevorzugt eine Frequenzbandbereite von 4 GHz bei einem Betrieb des Radarsensors in einem Frequenzband von 77 bis 81 GHz. Ferner ist es für die Detektion von Veränderungen in der Einbausituation vorteilhaft, eine breitbandige Antennenanordnung im Radarsensor zu verwenden, die aus mehreren Sende- und Empfangsantennen besteht. Die so entstehende Kombination aus der Abstands- und Winkelauflösung ermöglicht die Lokalisation von Störungen in Abstrahlrichtung des Radarsensors auch innerhalb der Verbauumgebung, beispielsweise eines Stoßfängers. Nicht nur starke Störungen durch die Ultranahbereich-Reflektionen (Abstand < 5 cm, µ > 160°) können durch diese hochauflösende Radarsensorik, bevorzugt eine CMOS-Radarsensorik, erkannt werden, sondern auch die Degradation in der Leistung durch die Dämpfung und die Winkelverzerrung aufgrund des Einflusses der Verbauumgebung, beispielsweise eines Stoßfängers (Material, Lackierung, Diskontinuitäten, Deformation, Toleranzen, Alterung, Temperatureinfluss und dergleichen).

Diese soeben diskutierten Ausgestaltungen sind besonders einfach zu realisieren, wenn ein Radarsensor in Halbleitertechnologie, insbesondere CMOS-Technologie, verwendet wird, wie dies eingangs bereits diskutiert wurde. Bei herkömmlichen Radarsensoren, die auf SiGe-Technologien basieren, ist eine höhere Integration der analogen und digitalen Teile in einem Halbleiterchip eher komplex bzw. teuer, so dass durch den diskreten Aufbau des Radarsensors in der SiGe-Technik eine mögliche Selbstadaption zu einem sehr großen Sensor führt, der nicht leicht im Fahrzeug zu integrieren ist. Mithin sind auf CMOS-Technologie basierende Radarsensoren deutlich bevorzugt, da die Hochintegrationsfähigkeit, die RF-CMOS mit einem 45 Nanometer-, 40 Nanometer- oder 28 Nanometer-Prozess bietet, einen äußerst kleinbauenden und kostengünstigen Aufbau des selbstadaptierenden Radarsensor ermöglicht.

Eine besonders vorteilhafte Ausgestaltung der vorliegenden Erfindung sieht daher vor, dass ein Radarsensor mit einem durch einen Halbleiterchip, insbesondere einen CMOS-Chip, realisierten Radartransceiver verwendet wird. Besonders vorteilhaft ist es dabei, wenn durch den Halbleiterchip auch eine digitale Signalverarbeitungskomponente und/oder eine Steuereinheit des Radarsensors realisiert werden und/oder eine oder die Antennenanordnung des Radarsensors und der Halbleiterchip als ein Package realisiert sind. Auf diese Weise können nicht nur die analogen Hochfrequenzkomponenten, sondern auch die dazugehörigen digitalen Komponenten integriert werden, so dass die Signalwege äußerst kurz und kontrolliert sind. Dies ermöglicht insbesondere das Erreichen eines äußerst niedrigen Rauschlevels bzw. eines äußerst hohen Signal-zu-Rausch-Verhältnisses. Auch hiermit ist eine deutlich verbesserte Lokalisierung von kleinen Strukturen im Ultranahbereich möglich und Reflektion und Transmission im Ultranahbereich können ebenso analysiert werden.

Mithin kann allgemein gesagt werden, dass es zweckmäßig ist, wenn die Abweichungsinformationen wenigstens teilweise aus einer veränderten Position wenigstens einer Störstelle zu dem Radarsensor und/oder einem veränderten Reflektions- und/oder Transmissionsverhalten einer zu durchstrahlenden Komponente der Verbauumgebung ermittelt wird. Das bedeutet, es werden Merkmale im Ultranahbereich identifiziert und vermessen, um Veränderungen festzustellen, wobei zweckmäßigerweise auch die Vergleichsinformationen und die Messinformationen auf Merkmale im Ultranahbereich, also der unmittelbaren Einbauposition, bezogen sein können, insbesondere also auf den Radarsensor selbst und/oder zu durchstrahlende Komponenten der Verbauumgebung.

Eine besonders vorteilhafte Weiterbildung sieht vor, dass eine oder die Steuereinheit des Radarsensors, insbesondere die digitale Signalverarbeitungskomponente nutzend, zur Ermittlung der Abweichungsinformation und/oder der Auswertung des Rekalibrierungskriteriums und/oder zur Ermittlung und Einstellung neuer Betriebsparameter verwendet wird. Insbesondere kann mithin das gesamte Verfahren auf einer Steuereinheit des Radarsensors, insbesondere der hochintegriert mit dem Radartransceiver in einem gemeinsamen Chip integrierten Steuereinheit des Radarsensors, verwirklicht werden, so dass insgesamt ein sich selbst an Veränderungen der Einbausituation adaptierender Radarsensor entsteht, der dann, wenn auch eine digitale Signalverarbeitungskomponente (DSP) in dem Halbleiterchip integriert ist, bevorzugt auch diese nutzen kann, um Auswertungsergebnisse zu bestimmen, beispielsweise Abweichungsinformationen, Messinformationen und Vergleichsinformationen.

Bevorzugt wird bei einem Kraftfahrzeug, das mehrere, insbesondere verdeckt verbaute, Radarsensoren aufweist, das hier beschriebene Verfahren für alle diese Radarsensoren angewendet. Ist ein Radarsensor beispielsweise verdeckt im bzw. hinter einem Stoßfänger verbaut, treten verschiedene Effekte auf, die die Leistungsfähigkeit des Radarsensors beeinflussen. Diese sind zum einen zu durchstrahlende Komponenten der Verbauumgebung, hier des Stoßfängers, nachdem beispielsweise Reflektionen am Übergang zum Stoßfängermaterial, Reflektionen an Übergängen zwischen dem Stoßfängermaterial und Lackschichten bzw. zwischen Lackschichten und dergleichen auftreten können. Eine Dämpfung des Radarsignals durch Reflektionen kann hierbei beispielsweise eine Reduzierung der maximalen Reichweite und/oder Empfindlichkeit zur Folge haben, wobei insbesondere eine Reflektion auch an einer Radomrückseite gegeben sein kann, die auch eine Störung der Elektronik bewirken kann. Durch Brechung/Beugung an Komponenten des Radarsensors bzw. der Verbauumgebung können Winkelmessfehler auftreten. Auch Störstellen innerhalb zu durchstrahlender Teile, insbesondere des Stoßfängers, sind denkbar und können einen Einfluss auf die Leistungsfähigkeit des Radarsensors haben. Daher ist grundlegend eine Systemauslegung, mithin Abstimmung der Betriebsparameter, auf die gewollte Starteinbauposition in der ursprünglichen Verbauumgebung zwingend erforderlich, um die Leistungsfähigkeit des Radarsensors sicherzustellen. Das hier beschriebene erfindungsgemäße Verfahren ermöglicht es nun, auf Veränderungen in der Verbausituation reagieren zu können, indem die Betriebsparameter geeignet rekalibriert werden.

Neben dem Verfahren betrifft die Erfindung auch ein Kraftfahrzeug, aufweisend wenigstens einen Radarsensor und eine zur Durchführung des erfindungsgemäßen Verfahrens ausgebildete Steuereinrichtung. Dabei handelt es sich bei der Steuereinrichtung bevorzugt um eine Steuereinheit des Radarsensors und/oder die Steuereinheit des Radarsensors bildet wenigstens einen Teil der Steuereinrichtung. Entsprechend betrifft die vorliegende Erfindung auch einen Radarsensor, aufweisend eine zur Durchführung des erfindungsgemäßen Verfahrens ausgebildete Steuereinheit, die bevorzugt als Teil eines Halbleiterchips des Radarsensors realisiert ist. Sämtliche Ausführungen bezüglich des erfindungsgemäßen Verfahrens gelten auch für das Kraftfahrzeug und den Radarsensor fort, so dass auch mit diesen die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: einen Radarsensor des Kraftfahrzeugs gemäß Fig. 1,
- Fig. 3: eine Verbausituation des Radarsensors in einem Stoßfänger, und
- Fig. 4: einen Ablaufplan eines Ausführungsbeispiels des erfindungsgemäßen Verfahrens.

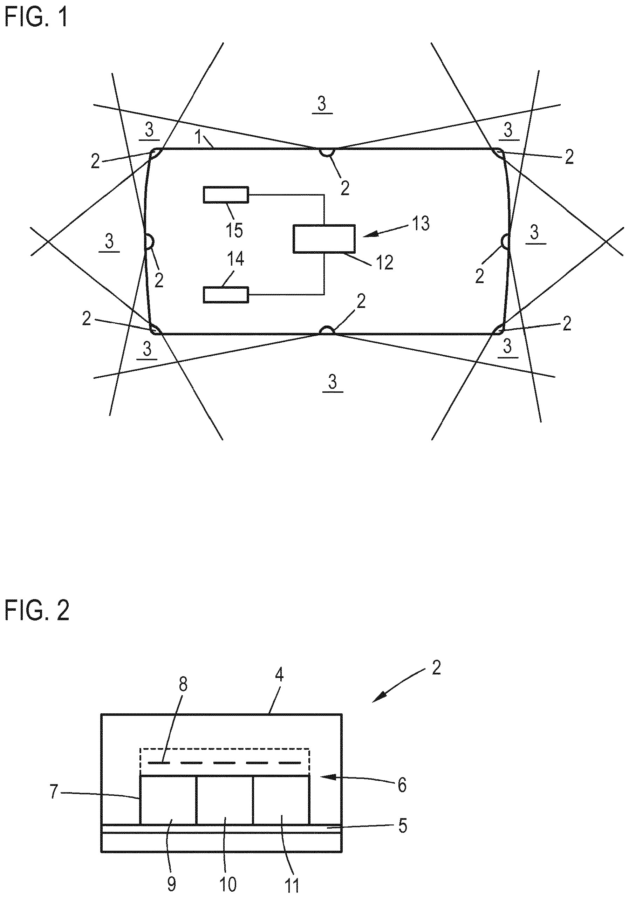

Fig. 1 zeigt eine Prinzipskizze eines erfindungsgemäßen Kraftfahrzeugs 1. Dieses weist acht Radarsensoren 2 auf, von denen drei im hinteren Stoßfänger, drei im vorderen Stoßfänger und zwei in den Türen des Kraftfahrzeugs 1 verdeckt verbaut sind. Nachdem es sich um Weitwinkel-Radarsensoren 2 mit einem Öffnungswinkel des Erfassungsbereichs 3 im Azimut von 150° handelt, ist, wie die angedeuteten Erfassungsbereiche 3 anzeigen, eine Erfassung des Umfelds des Kraftfahrzeugs 1 in einem 360°-Radius möglich.

Fig. 2 zeigt den Aufbau der verwendeten Radarsensoren 2 genauer. Jeder Radarsensor 2 ist in Halbleitertechnologie, hier konkret CMOS-Technologie, realisiert und wird in einem Frequenzband von 77 bis 81 GHz mit einer Frequenzbandbreite von 4 GHz betrieben, um gemeinsam mit der mehrere Sende- und Empfangsantennen derart, dass durch ihre Anordnung eine Winkelauflösung in zwei zueinander senkrechten Ebenen gegeben ist, aufweisenden Antennenanordnung 8 hochauflösende Radardaten zu liefern. Der Radarsensor 2 weist ein Gehäuse 4 auf, in dem eine Leiterplatte 5 gehaltert ist, die ein Package 6 trägt, das aus einem Halbleiterchip 7 sowie der Antenennanordnung 8 des Radarsensors 2 gebildet ist. Durch den Halbleiterchip 7, hier einen CMOS-Chip, sind neben einem Radartransceiver 9 auch eine Steuereinheit 10 des Radarsensors 2 und eine digitale Signalverarbeitungskomponente 11 (DSP) des Radarsensors 2 realisiert. Der Radarsensor 2 kann ferner eine hier nicht näher gezeigte Speichereinrichtung aufweisen, in der in einer Datenbank Sätze von Veränderungsparametern, die Veränderungen in der Einbausituation beschreiben, mit zugeordneten Vergleichsinformationen und durch die Veränderungen auftretende Verschlechterungen der Leistungsfähigkeit wenigstens teilweise kompensierenden Kalibrierungsparametern gespeichert sind, worauf im Folgenden noch näher eingegangen werden wird. Betriebsparameter des Radarsensors 2, beispielsweise Detektionsschwellwerte, Rauschschwellwerte, Sendeleistungen, Sendefrequenzbandbreiten, Frequenzrampen beschreibende Parameter und dergleichen, können eingestellt werden, um der Verbausituation des Radarsensors 2 in dem Kraftfahrzeug zur Erreichung einer dennoch hinreichenden Leistungsfähigkeit gerecht zu werden.

Bei aktivierten Radarsensoren 2 können die Sensordaten der Radarsensoren 2, vgl. Fig. 1, an ein zentrales Steuergerät 12 des Kraftfahrzeugs 1 geliefert werden, wo sie beispielsweise zur Ermittlung eines Sensordaten verschiedener Umfeldsensoren fusionierenden Umfeldmodells eingesetzt werden können. Die Sensordaten der Radarsensoren 2 können so durch verschiedene Fahrzeugsysteme 13, 14, 15 genutzt werden.

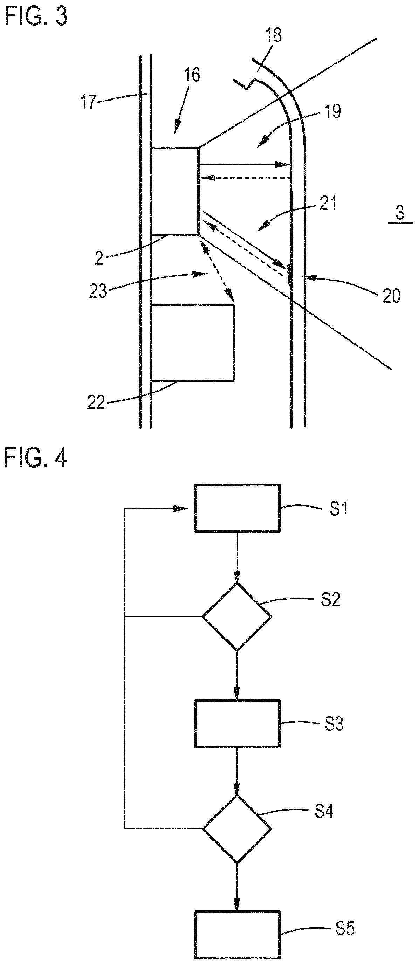

Fig. 3 zeigt einen an einer Einbauposition 16 in einem Stoßfänger des Kraftfahrzeugs 1 verbauten Radarsensor 2. Der Radarsensor 2 ist dabei auf einem Stoßfänger-Basisteil 17 angeordnet und durchstrahlt bei einer Messung mit den Radarsignalen als Komponente der Verbauumgebung ein Stoßfänger-Schließteil 18. Ersichtlich treten eine Vielzahl von Effekten auf, die bei der Auswahl von eine maximal mögliche Leistungsfähigkeit des Radarsensors 2 erlaubenden Betriebsparametern zu berücksichtigen sind. Wie durch die Pfeile 19 angedeutet, sind zunächst Reflektion und Dämpfung durch das Stoßfängermaterial des Stoßfänger-Schließteils 18 zu berücksichtigen. Störstellen 20 im Stoßfänger-Schließteil 18 (oder anderen zu durchstrahlenden Komponenten der Verbauumgebung) können, wie die Pfeile 21 zeigen, ebenso bemerkbar sein, genauso wie Reflektionen an weiteren Komponenten 22 durch Nebenkeulen, vgl. Pfeil 23. Dies ist nur eine Auswahl möglicher Effekte, die bei der Wahl der Betriebsparameter des Radarsensors 2 in der Starteinbauposition 16 unter Berücksichtigung der ursprünglichen Verbauumgebung zu berücksichtigen sind.

Während der Radarsensor 2 beim Betrieb des Kraftfahrzeugs 1 genutzt wird, können jedoch eine Vielzahl von Veränderungen der Verbausituation auftreten. Alterungseffekte des Radarsensors 2 und/oder des Stoßfängers, kleinere Beschädigungen des Stoßfängers, Veränderungen der Einbauposition und dergleichen können dazu führen, dass die ursprünglich gewählten Betriebsparameter nicht mehr geeignet sind, die gewünschte Leistungsfähigkeit zu erbringen. Hier setzt das erfindungsgemäße Verfahren an, dessen durch die Steuereinheit 10 des Radarsensors 2 durchgeführtes Ausführungsbeispiel mithilfe von Fig. 4 näher erläutert werden soll. In einem Schritt S1 wird dort regelmäßig eine Abweichungsinformation bestimmt, die beschreibt, wie sich die Leistungsfähigkeit des Radarsensors 2 im Vergleich zur ursprünglichen Verbausituation, insbesondere also dem Zeitpunkt der ersten Inbetriebnahme, verändert hat. Dazu werden bevorzugt vorbestimmte Sendesignale, die auch zur Ermittlung einer später gegebenenfalls genutzten Messinformation dienen, ausgestrahlt, wobei das entsprechende Messergebnis mit einem Messergebnis zum Zeitpunkt der ersten Inbetriebnahme mit den ursprünglichen Betriebsparametern und/oder einem theoretisch, beispielsweise durch Simulation, ermittelten Vergleichsergebnis verglichen werden. Hierbei können beispielsweise Leistungsfähigkeitswerte ermittelt und deren Abweichungen betrachtet werden. Die Abweichungsinformation kann auch auf Basis von detektierbaren Störstellen 20 und/oder dem Reflektions- bzw. Transmissionsverhalten zu durchstrahlender Komponenten beeinflusst sein bzw. auf dieser Grundlage ermittelt werden. Die genaue Vermessung des Ultranahbereichs wird dabei durch die spezielle hochauflösende Realisierung des Radarsensors 2 ermöglicht.

In einem Schritt S2 wird überprüft, ob ein die Abweichungsinformation auswertendes Rekalibrierungskriterium erfüllt ist, welches den zeitlichen Verlauf der Abweichungsinformation dahingehend auswertet, ob eine anhaltende Verschlechterung der Leistungsfähigkeit des Radarsensors 2 gegeben ist. Ist das Rekalibrierungskriteriuim nicht erfüllt, wird der Betrieb des Radarsensors 2 mit denselben Betriebsparametern fortgeführt, bis in Schritt S1 eine erneute Ermittlung der Abweichungsinformation erfolgt.

Ist jedoch das Abweichungskriterium erfüllt, so wird in einem Schritt S3 versucht, neue Betriebsparameter für den Radarsensor 2 aufzufinden, die die eingetretene Leistungsverschlechterung wenigstens teilweise wieder kompensieren können. Während es in weniger bevorzugten Ausführungsbeispielen vorgesehen ist, ein Optimierungsverfahren mit verschiedenen Testmessungen zu nutzen, sieht dieses Ausführungsbeispiel vor, aus den idealerweise ohnehin im Schritt S1 schon gemessenen Reflektionssignalen der vorbestimmten Sendesignale eine Messinformation zu ermitteln, die kennzeichnend für möglicherweise eingetretene Veränderungen in der Einbausituation ist.

Bereits vor dem hier beschriebenen Verfahrensteil wurde nämlich eine Datenbank ermittelt, die für verschiedene Veränderungen der Einbausituation beschreibende Veränderungsparameter jeweils eine Vergleichsinformation und Kalibrierungsparameter enthält. Die Vergleichsinformation gibt an, welche Messinformation bei genau den durch die Veränderungsparameter beschriebenen Veränderungen und Benutzung der ursprünglichen Betriebsparameter aus den Reflektionssignalen der vorbestimmten Sendesignale abgeleitet werden würde. Dabei ist insbesondere darauf hinzuweisen, dass bei einer wiederholten Rekalibrierung darauf zu achten ist, dass das Vermessen der aktuellen Reflektionssignale wieder mit den ursprünglichen Betriebsparametern durchzuführen ist. Dabei sind vorliegend auch die Veränderungsparameter in der Datenbank gespeichert, die innerhalb des Radarsensors 2 selbst, aber auch beispielsweise in dem Steuergerät 12 oder gar kraftfahrzeugextern auf einem Backend abgelegt sein kann, wo die Steuereinheit 10 darauf zugreifen kann.

Veränderungsparameter können dabei verschiedenste Sachverhalte betreffen, beispielsweise Veränderungen der Einbauposition zur Starteinbauposition 16 (Verkippungen, Verschiebungen), Veränderungen von zu durchstrahlenden Komponenten (Beschädigungen, Verschiebungen, Verkippungen, Änderungen der Transmission) und dergleichen. Insbesondere können für kurzzeitige, danach wieder zurückzusetzende Kalibrierungen auch Veränderungsparameter miteinbezogen werden, die veränderte Umgebungsbedingungen betreffen, beispielsweise Wetterverhältnisse.

Im Schritt S3 werden nun die Vergleichsinformationen mit der aktuellen Messinformation verglichen. Ergibt sich hierbei bereits eine eindeutige Übereinstimmung, existiert nur ein Auswahlsatz von Kalibrierungsparametern, der dann unmittelbar als neue Betriebsparameter verwendet und eingestellt werden kann. Ist das Ergebnis jedoch uneindeutig, werden also mehrere einzelne Datensätze durch den Vergleich als mögliche Veränderungen beschreibend aufgefunden, kann durch Optimierungsmessungen ermittelt werden, welcher Satz von Kalibrierungsparametern die beste Leistungsfähigkeit des Radarsensors 2 in der Zukunft erlaubt. Dieser Auswahlsatz wird dann als neue Betriebsparameter des Radarsensors 2 verwendet.

Es kann jedoch auch vorkommen, dass keine geeigneten neuen Betriebsparameter, die eine Mindestleistungsfähigkeit des Radarsensors 2 erlauben, im Schritt S3 aufgefunden wurden. Ist dies der Fall, ist im Schritt S4 ein Defektkriterium erfüllt, so dass mit dem Schritt S5 fortgefahren wird. Dort wird ein Defektzustand für den Radarsensor 2 gesetzt und dieser wird deaktiviert. Ferner wird eine Defektinformation an den Fahrer des Kraftfahrzeugs ausgegeben und in einem Fehlerspeicher gespeichert. Nachdem in der Datenbank auch die Veränderungsparameter gespeichert sind, kann aus der besten Übereinstimmung auch auf die Ursache des Defekts gefolgert werden, beispielsweise, ob dieser im Radarsensor selbst liegt oder in der Verbauumgebung. Auch dies kann entsprechend in die Defektinformation integriert sein.

Ist jedoch das Defektkriterium nicht erfüllt, so wird nach dem Schritt S4 und Einstellung neuer Betriebsparameter mit dem üblichen Betrieb des Radarsensors 2 mit wenigstens teilweise kompensierten Leistungsfähigkeitseinbußen fortgefahren.

## Patentansprüche

1. Verfahren zum Betrieb eines Radarsensors (2) in einem Kraftfahrzeug (1), welcher Radarsensor (2) durch Einstellung von ursprünglichen Betriebsparametern nach Verbau in einer Starteinbauposition (16) in einer ursprünglichen Verbauumgebung einbaupositionsspezifisch kalibriert wird,
wobei während des Betriebs des Radarsensors (2) nach dem Verbau und der Kalibrierung in der Starteinbauposition (16) in der ursprünglichen Verbauumgebung regelmäßig eine die Abweichung von der ursprünglichen Leistungsfähigkeit beschreibende Abweichungsinformation durch Messung mit dem Radarsensor (2) ermittelt wird,
wobei bei einem erfüllten, die Abweichungsinformation auswertenden Rekalibrierungskriterium neue, die Reduzierung der Leistungsfähigkeit wenigstens teilweise kompensierende Betriebsparameter des Radarsensors (2) ermittelt und eingestellt werden, **dadurch gekennzeichnet, dass** für den oder einen baugleichen Radarsensor (2) in der oder einer baugleichen Verbauumgebung für unterschiedliche, eine gegenüber der Starteinbauposition (16) veränderte Einbauposition und/oder Veränderungen der Bauumgebung beschreibende Sätze von Veränderungsparametern durch Simulation und/oder Messung die gegenüber der Starteinbauposition (16) und/oder der ursprünglichen Verbauumgebung auftretenden Leistungsfähigkeitseinbußen wenigstens teilweise kompensierende Kalibrierungsparameter und eine ein auf wenigstens ein vordefiniertes Sendesignal unter Verwendung der ursprünglichen Betriebsparameter bei Vorliegen der durch die Veränderungsparameter beschriebenen Veränderungen gemessenes Reflexionssignal beschreibende Vergleichsinformation bestimmt werden, wobei bei erfülltem Rekalibrierungskriterium durch Vergleich einer durch Aussenden des wenigstens einen vordefinierten Sendesignals und Vermessen eines zugeordneten Reflexionssignals ermittelten aktuellen Messinformation mit den Vergleichsinformationen wenigstens ein mögliche eingetretene Veränderungen beschreibender Auswahlsatz von Veränderungsparametern ermittelt und die Kalibrierungsparameter wenigstens eines des wenigstens einen Auswahlsatzes als neue Betriebsparameter des Radarsensors (2) eingestellt werden.

2. Verfahren nach Anspruch 1,
**dadurch gekennzeichnet,**
**dass** bei mehreren Auswahlsätzen ein im Rahmen eines Optimierungsverfahrens und/oder durch Optimierungsmessungen ermittelter, die beste Leistungsfähigkeit des Radarsensors (2) bei Nutzung der zugeordneten Kalibrierungsparameter erlaubender Auswahlsatz ermittelt und dessen Kalibrierungsparameter als Betriebsparameter eingestellt werden.

3. Verfahren nach Anspruch 1 oder 2,
**dadurch gekennzeichnet,**
**dass** die einzelnen Veränderungsparameter nach Art eines Sweeps diesen zugeordnete Veränderungsparameterintervalle abdecken.

4. Verfahren nach einem der vorangehenden Ansprüche,
**dadurch gekennzeichnet,**
**dass** wenigstens ein auf die Umgebung bezogener Veränderungsparameter, der eine Veränderung der Umgebungsbedingungen des Kraftfahrzeugs (1) beschreibt, insbesondere eine Wettersituation, verwendet wird, wobei bei Erfüllung des Rekalibrierungskriteriums aufgrund einer Veränderung der Umgebungsbedingungen die verändert eingestellten Betriebsparameter nur für den Zeitraum des Vorliegens der Veränderung der Umweltbedingungen verwendet werden.

5. Verfahren nach einem der vorangehenden Ansprüche,
**dadurch gekennzeichnet,**
**dass** das Rekalibrierungskriterium einen zeitlichen Verlauf der Abweichungsinformation auf ein länger andauerndes Vorliegen einer Reduzierung der Leistungsfähigkeit gegenüber der ursprünglichen Leistungsfähigkeit auswertet.

6. Verfahren nach einem der vorangehenden Ansprüche,
**dadurch gekennzeichnet,**
**dass** bei Erfüllung eines die Abweichungsinformation auswertenden, eine größere Abweichung der Leistungsfähigkeit als beim Rekalibrierungskriterium anzeigenden Defektkriteriums und/oder eines die Nichtauffindbarkeit von eine vorbestimmte Leistungsfähigkeit zusichernden neuen Betriebsparametern anzeigenden Defektkriteriums ein Defektzustand für den Radarsensor (2) gesetzt wird und dieser insbesondere deaktiviert wird.

7. Verfahren nach Anspruch 6,
**dadurch gekennzeichnet,**
**dass** auch bei Erfüllung des Defektkriteriums durch Vergleich einer durch Aussenden des wenigstens einen vordefinierten Sendesignals und Vermessen eines zugeordneten Reflexionssignals ermittelten aktuellen Messinformation mit den Vergleichsinformationen wenigstens ein mögliche eingetretene Veränderungen beschreibender Ursachensatz von Veränderungsparametern ermittelt wird, wobei durch Auswertung des Ursachensatzes ermittelt wird, ob der Defekt in der Verbauumgebung oder dem Radarsensor (2) vorliegt.

8. Verfahren nach einem der vorangehenden Ansprüche,
**dadurch gekennzeichnet,**
**dass** der Radarsensor (2) mit einer Frequenzbandbreite größer als 2 GHz, insbesondere größer oder gleich 4 GHz, betrieben wird und/oder ein Radarsensor (2) mit einer Antennenanordnung (8) mit mehreren Sende- und/oder Empfangsantennen verwendet wird, die insbesondere zur Winkelauflösung in zwei zueinander senkrechten Ebenen angeordnet sind.

9. Verfahren nach einem der vorangehenden Ansprüche,
**dadurch gekennzeichnet,**
**dass** die Abweichungsinformation wenigstens teilweise aus einer veränderten Position wenigstens einer Störstelle (20) zu dem Radarsensor (2) ermittelt wird.

10. Verfahren nach einem der vorangehenden Ansprüche,
**dadurch gekennzeichnet,**
**dass** ein Radarsensor (2) mit einem durch einen Halbleiterchip (7), insbesondere einen CMOS-Chip, realisierten Radartransceiver (9) verwendet wird.

11. Verfahren nach Anspruch 10,
**dadurch gekennzeichnet,**
**dass** durch den Halbleiterchip (7) neben dem Radartransceiver (9) eine digitale Signalverarbeitungskomponente (11) und/oder eine Steuereinheit (10) des Radarsensors (2) realisiert werden und/oder eine oder die Antennenanordnung (8) des Radarsensors (2) und der Halbleiterchip (7) als ein Package (6) realisiert sind.

12. Verfahren nach einem der vorangehenden Ansprüche,
**dadurch gekennzeichnet,**
**dass** eine oder die Steuereinheit (10) des Radarsensors (2), insbesondere die digitale Signalverarbeitungskomponente (11) nutzend, zur Ermittlung der Abweichungsinformation und/oder der Auswertung des Rekalibrierungskriteriums und/oder zur Ermittlung und Einstellung neuer Betriebsparameter verwendet wird.

13. Kraftfahrzeug (1), aufweisend wenigstens einen Radarsensor (2) und eine zur Durchführung eines Verfahrens nach einem der vorangehenden Ansprüche ausgebildete Steuereinrichtung.

14. Radarsensor (2), aufweisend eine zur Durchführung eines Verfahrens nach einem der Ansprüche 1 bis 12 ausgebildete Steuereinheit (10).

## Claims

1. Method for operating a radar sensor (2) in a motor vehicle (1), which radar sensor (2) is calibrated in an installation-position-specific manner by setting original operating parameters after installation in a starting installation position (16) in the original installation environment,
wherein during the operation of the radar sensor (2) after the installation and the calibration in the starting installation position (16) in the original installation environment deviation information describing the deviation from the original performance capability is regularly determined by measurement with the radar sensor (2),
wherein when a recalibration criterion evaluating the deviation information is fulfilled, new operating parameters of the radar sensor (2) at least partially compensating for the reduction of the performance capability are determined and set, **characterised in that** for the or an identically structured radar sensor (2) in the or an identically structured installation environment for different sets of change parameters describing an installation position changed relative to the starting installation position (16) and/or changes in the construction environment by simulation and/or measurement calibration parameters at least partially compensating the performance capability loss occurring in relation to the starting installation position (16) and/or the original installation environment and comparison information describing a reflection signal measured on at least one predefined transmission signal using the original operating parameter, when the changes described by the change parameters are present, are determined, wherein when the recalibration criterion is fulfilled by comparison of current measurement information determined by transmission of the at least one pre-defined transmission signal and measurement of an associated reflection signal with the comparison information, at least one possible selection set of change parameters describing changes that occurred and the calibration parameters at least of one of the at least one selection set are set as new operating parameters of the radar sensor (2).

2. Method according to claim 1,
**characterised in that**
in the case of a plurality of selection sets one selection set determined as part of an optimisation process and/or by optimisation measurements, which selection set permits the best performance capability of the radar sensor (2) when using the associated calibration parameters, is determined and its calibration parameters are set as the operating parameters.

3. Method according to claim 1 or 2,
**characterised in that**
the individual change parameters in the manner of a sweep cover these associated change parameter intervals.

4. Method according to any one of the preceding claims,
**characterised in that**
at least one change parameter related to the environment, which describes a change of the environmental conditions of the motor vehicle (1), in particular, a weather situation, is used, wherein when the recalibration criterion is fulfilled based on a change in the environmental conditions the modified set operating parameters are used only for the time period of the presence of the change in the environmental conditions.

5. Method according to any one of the preceding claims,
**characterised in that**
the recalibration criterion evaluates a time course of the deviation information on a longer-lasting presence of a reduction in the performance capability relative to the original performance capability.

6. Method according to any one of the preceding claims,
**characterised in that**
when a defect criterion is fulfilled evaluating the deviation information and showing a greater deviation of the performance capability than during the recalibration and/or a defect criterion is fulfilled showing the inability to find new operating parameters guaranteeing a predetermined performance capability, a defect state is set for the radar sensor (2) and the latter is particular is deactivated.

7. Method according to claim 6,
**characterised in that**
even when the defect criterion is fulfilled by comparison of current measurement information determined by transmission of the at least one pre-defined transmission signal and measurement of an associated reflection signal with the comparison information, at least one possible causal set of change parameters describing changes that occurred is determined, wherein it is determined by evaluation of the causal set whether the defect is present in the installation environment or in the radar sensor (2).

8. Method according to any one of the preceding claims,
**characterised in that**
the radar sensor (2) is operated with a frequency bandwidth greater than 2 GHz, in particular greater than or equal to 4 GHz and/or a radar sensor (2) is used with an antenna arrangement (8) with a plurality of transmitting- and/or receiving antenna, which, in particular, are arranged for angular resolution in two planes perpendicular to one another.

9. Method according to any one of the preceding claims,
**characterised in that**
the deviation information is determined at least partially from a changed position at least of one fault location (20) with respect to the radar sensor (2).

10. Method according to any one of the preceding claims,
**characterised in that**
a radar sensor (2) is used with a radar transceiver (9) realised by a semiconductor chip (7), in particular a CMOS chip.

11. Method according to claim 10,
**characterised in that**
a digital signal processing component (11) and/or a control unit (10) of the radar sensor (2) is realised by the semiconductor chip (7) in addition to the radar transceiver (9) and/or an or the antenna arrangement (8) of the radar sensor (2) and the semiconductor chip (7) are realised as a package (6).

12. Method according to any one of the preceding claims,
**characterised in that**
a or the control unit (10) of the radar sensor (2), in particular, using the digital signal processing component (11), is used for determining the deviation information and/or the evaluation of the recalibration criterion and/or for determining and setting new operating parameters.

13. Motor vehicle (1) having at least one radar sensor (2) and a control device designed for implementing a method according to any one of the preceding claims.

14. Radar sensor (2), having a control unit (10) designed for implementing a method according to any one of claims 1 to 12.

## Revendications

1. Procédé de fonctionnement d'un capteur radar (2) dans un véhicule à moteur (1), lequel capteur radar (2) est étalonné de manière spécifique par le réglage de paramètres de fonctionnement d'origine après montage dans une position d'installation de démarrage (16) dans un environnement de montage d'origine,
dans lequel
pendant le fonctionnement du capteur radar (2) après le montage et l'étalonnage dans la position d'installation de démarrage (16) dans l'environnement de montage d'origine, une information d'écart décrivant l'écart de la performance d'origine est régulièrement déterminée par mesure avec le capteur radar (2),
dans lequel de nouveaux paramètres de fonctionnement du capteur radar (2) compensant au moins partiellement la réduction de la performance, sont déterminés et fixés lors du remplissage d'un critère de réétalonnage évaluant l'information d'écart, **caractérisé en ce que**, pour le ou un capteur radar (2) de montage identique dans le ou un environnement d'installation de montage identique pour différents environnements d'installation, un ensemble de paramètres de modification décrivant une position d'installation modifiée et/ou des modifications dans l'environnement de montage par rapport à la position d'installation initiale (16) sont déterminés par simulation et/ou mesure, les paramètres d'étalonnage compensant au moins partiellement les pertes de performance survenant par rapport à la position d'installation initiale (16) et/ou à l'environnement de montage d'origine et une information de comparaison décrivant un signal réfléchi mesuré sur au moins un signal d'émission prédéfini en utilisant les paramètres de fonctionnement d'origine en présence des modifications décrites par les paramètres de modification, dans lequel, lors du remplissage du critère de réétalonnage, au moins un ensemble de sélection de paramètres de modification décrivant des modifications possibles survenues est déterminé en comparant les informations de mesure actuelles déterminées en transmettant l'au moins un signal de transmission prédéfini et en mesurant un signal réfléchi associé avec les informations de comparaison, et les paramètres d'étalonnage d'au moins un de l'au moins un ensemble de sélection sont définis comme nouveaux paramètres de fonctionnement du capteur radar (2).

2. Procédé selon la revendication 1,
**caractérisé en ce que**
pour plusieurs ensembles de sélection, un ensemble de sélection déterminé dans le cadre d'un procédé d'optimisation et/ou par des mesures d'optimisation permettant la meilleure performance du capteur radar (2) lors de l'utilisation des paramètres d'étalonnage associés et les paramètres d'étalonnage de celui-ci sont réglés comme paramètres de fonctionnement.

3. Procédé selon la revendication 1 ou 2,
**caractérisé en ce que**
les paramètres de modification individuels par type de balayage couvrent ces intervalles de paramètres de modification associés.

4. Procédé selon l'une quelconque des revendications précédentes,
**caractérisé en ce qu'**
au moins un paramètre de modification lié à l'environnement, qui décrit une modification des conditions environnementales du véhicule à moteur (1), en particulier une situation météorologique, est utilisé, dans lequel, lors du remplissage du critère de réétalonnage en raison d'une modification des conditions environnementales, les paramètres de fonctionnement réglés modifiés ne sont utilisés que pour la période d'existence de la modification des conditions environnementales.

5. Procédé selon l'une quelconque des revendications précédentes,
**caractérisé en ce que**
le critère de réétalonnage évalue un déroulement temporel des informations d'écart lors d'une période d'existence persistante d'une réduction de performance par rapport à la performance initiale.

6. Procédé selon l'une quelconque des revendications précédentes,
**caractérisé en ce qu'**
un état de défaut est réglé pour le capteur radar (2), et **en ce que** celui-ci est en particulier désactivé lors du remplissage d'un critère de défaut évaluant l'information d'écart et indiquant un écart de performance plus important qu'avec le critère de réétalonnage et/ou un critère de défaut indiquant le caractère introuvable de nouveaux paramètres de fonctionnement garantissant une performance prédéterminée.

7. Procédé selon la revendication 6,
**caractérisé en ce que**
même lors du remplissage du critère de défaut, au moins un ensemble de causes de paramètres de modification décrivant au moins une modification possible survenue est déterminé en comparant les informations de mesure actuelles déterminées en transmettant l'au moins un signal d'émission prédéfini et en mesurant un signal de réflexion associé avec les informations de comparaison, dans lequel il est déterminé par l'évaluation de l'ensemble de causes si le défaut est présent dans l'environnement d'installation ou dans le capteur radar (2).

8. Procédé selon l'une quelconque des revendications précédentes,
**caractérisé en ce que**
le capteur radar (2) fonctionne avec une bande de fréquence supérieure à 2 GHz, en particulier supérieure ou égale à 4 GHz, et/ou un capteur radar (2) est utilisé avec un dispositif d'antenne (8) avec plusieurs antennes d'émission et/ou de réception, qui sont agencées en deux plans perpendiculaires entre eux en particulier pour la résolution angulaire.

9. Procédé selon l'une quelconque des revendications précédentes,
**caractérisé en ce que**
l'information d'écart est déterminée au moins partiellement à partir d'une position modifiée d'au moins un point d'interférence (20) avec le capteur radar (2).

10. Procédé selon l'une quelconque des revendications précédentes,
**caractérisé en ce qu'**
un capteur radar (2) est utilisé avec un émetteur-récepteur radar (9) réalisé par une puce à semi-conducteurs (7), en particulier une puce CMOS.

11. Procédé selon la revendication 10,
**caractérisé en ce qu'**
un composant de traitement de signal (11) numérique et/ou une unité de commande (10) du capteur radar (2) sont réalisés par la puce semi-conductrice (7) en plus de l'émetteur-récepteur radar (9) et/ou un ou le dispositif d'antenne (8) du capteur radar (2) et la puce semi-conductrice (7) sont réalisés sous forme de boîtier (6).

12. Procédé selon l'une quelconque des revendications précédentes,
**caractérisé en ce qu'**
une ou l'unité de commande (10) du capteur radar (2), en particulier le composant de traitement de signal (11) numérique, est utilisé(e) pour déterminer l'information d'écart et/ou l'évaluation du critère de réétalonnage et/ou pour déterminer et régler de nouveaux paramètres de fonctionnement.

13. Véhicule à moteur (1), présentant au moins un capteur radar (2) et un dispositif de commande formé pour effectuer un procédé selon l'une quelconque des revendications précédentes.

14. Capteur radar (2), présentant une unité de commande (10) formée pour effectuer un procédé selon l'une quelconque des revendications 1 à 12.
